(19) Europäisches Patentamt
European Patent Office
Office européen des brevets

(11) EP 1 874 057 A2

(12) **EUROPEAN PATENT APPLICATION**

(43) Date of publication:
02.01.2008 Bulletin 2008/01

(51) Int Cl.:
*H04N 7/26* (2006.01)  *H04N 7/30* (2006.01)
*A61B 8/00* (2006.01)

(21) Application number: 07012689.1

(22) Date of filing: 28.06.2007

(84) Designated Contracting States:
AT BE BG CH CY CZ DE DK EE ES FI FR GB GR HU IE IS IT LI LT LU LV MC MT NL PL PT RO SE SI SK TR
Designated Extension States:
AL BA HR MK YU

(30) Priority: 30.06.2006 KR 20060061088

(71) Applicant: MEDISON CO., LTD.
Kangwon-do 250-870 (KR)

(72) Inventors:
• Moon, Joo-Hee
  Samsung Jungang Heights Village101-903,
  Seoul 135-507 (KR)

• An, So Youn
  Bucheon-si, Gyeonggi-do 420-760 (KR)
• Jin, Rizhu
  Seoul 133-836 (KR)
• Moon, Hae Yean
  Gangnam-gu, Seoul 135-280 (KR)

(74) Representative: Lorenz, Markus
Lorenz & Kollegen
Alte Ulmer Strasse 2
89522 Heidenheim (DE)

(54) **Method of compressing an ultrasound image**

(57) Embodiments of the present invention may provide a method of compressing an ultrasound image. The method of compressing ultrasound images by coding pixel values of the ultrasound images with a Huffman table, comprises: a) receiving consecutive ultrasound images each having a plurality of pixels; b) determining characteristics of the pixels of the ultrasound images; c) updating the Huffman table based on the characteristics of the pixels of first to $(n-1)^{th}$ ultrasound images, wherein n is an integer greater than 1; and d) coding the pixels of an $n^{th}$ ultrasound image with the updated Huffman table.

FIG. 4

EP 1 874 057 A2

**Description**

The present application claims priority from Korean Patent Application No. 10-2006-0061088 filed on June 30, 2006, the entire subject matter of which is incorporated herein by reference.

## BACKGROUND

### 1. Field

The present invention generally relates to a method of compressing images, and more particularly to a method of compressing an ultrasound image by using coding pixel values of the ultrasound image with a Huffman table.

### 2. Background

Generally, a frame image is composed with ten thousands to millions of pixels. The number of pixels composing the frame image affects the resolution thereof. The resolution of the image is expressed as 1024*768, 800*640 or the like. 1024*768 resolution of an image means that the image is composed with 786432 pixels (1024 rows * 768 columns). More pixels mean that the image would be clearer. A pixel value is usually represented in terms of brightness, chrominance, luminance and the like. The brightness, chrominance or luminance may be indicated with an integer value. For example, the brightness of the pixel is indicated with levels 0 to 255. The frame image is a huge matrix of pixel values such as brightness, luminance and chrominance corresponding to each of 1024*768 pixels.

Since the image is composed with tremendous amount of image data such as the pixel values, data compression is required to efficiently transmit and store the image data. In order to compress the image data, the image is partitioned into a plurality of blocks, wherein each block corresponds to an 8*8 matrix. For example, if the image is a matrix of 1024*728 pixels, then the image is partitioned into 128*91 (horizontal*vertical) blocks. The block of 8*8 pixel matrix is a reference unit for the image compression. The image compression of Joint Photographic Expert Group (JPEG) is also carried out by using this block as a reference unit.

The image to be compressed is converted from an RGB color space into an YCbCr color space for JPEG coding using the following equation (1).

$$Y = 0.29900 * R + 0.58700 * G + 0.11400 * B$$
$$Cb = -0.16874 * R - 0.33126 * G + 0.50000 * B \qquad (1)$$
$$Cr = 0.50000 * R - 0.41869 * G - 0.108131 * B$$

Among Y, Cb and Cr components, one component (typically Y component) may be stored. Alternatively, three components Y, Cb and Cr may be stored. Storing the Y component means that the image is stored in a gray color.

R, G and B colors are used for expressing the color of a pixel in an image file such as BMP, PCX, GIF or the like. Each color is stored in a same ratio. However, the components Y, Cb and Cr in a JPEG file may be stored in a different ratio. For example, while the Y components of all the pixels are stored, CB and Cr components of specific pixels may be selected (referred to as "downsampling") and then stored. A downsampling interval is represented as a sampling ratio. When there is no downsampling, the sampling ratio is of 4:4:4. If the Y component of all the pixels is sampled and the CB and Cr components are sampled for an arbitrary one pixel among 4 pixels, then the sampling ratio is 4:2:0. The amount of image data can be reduced by adjusting the sampling ratio.

The block of 8*8 pixels in the downsampled image is converted into a frequency space by using discrete cosine transform (DCT), as shown by the following equation (2).

$$S_{vu} = \frac{1}{4} C_u C_v \sum_{x=0}^{7} \sum_{y=0}^{7} S_{yx} \cos\frac{(2x+1)u\pi}{16} \sin\frac{(2y+1)v\pi}{16} \qquad (2)$$

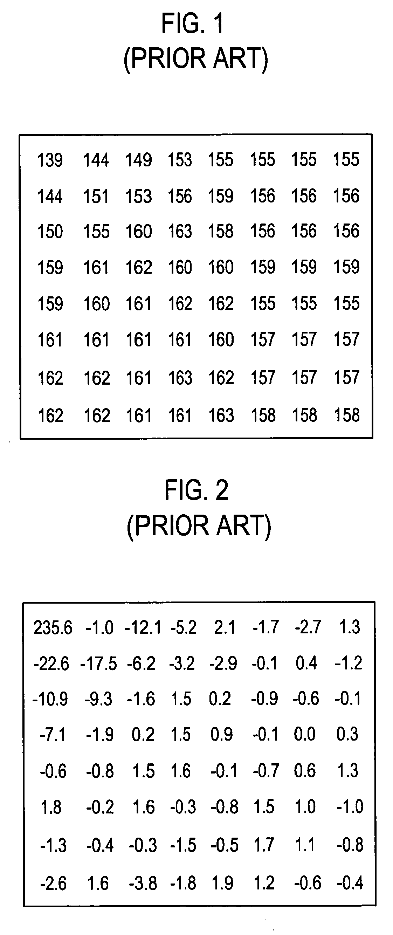

In the DCT converted block of 8*8 pixels, the value of a top-left corner represents a DC coefficient. The remaining 63 coefficients are referred to as AC coefficients. The DC coefficient corresponds to a low frequency component representing a characteristic of the block, while the AC coefficients correspond to high frequency components representing characteristics of pixels in the block. Especially, the brightness of the block depends upon the DC coefficient. Fig. 1 shows a specific 8*8 block 10 of an original image. Fig. 2 shows coefficients in a block 20 obtained by applying DCT to the 8*8 block 10 of the original image.

Subsequently, quantization is carried out by dividing the DCT coefficients by a constant and then rounding to the nearest integer. As a result of the quantization, many of the higher frequency components are rounded to zero. Further, many of the remaining components become small positive or negative numbers, which take fewer bits to store. According to quantization, the data that are not visibly important in the DCT coefficients are removed.

After the quantization, the quantized block is scanned in a zigzag manner, thereby obtaining an integer sequence such as an example of [15, 0, -2, -1, -1, -1, 0, 0, -1]. Subsequently, a bit string compression is carried out for the integer sequence by using a Huffman coding table. This is so that the 8*8 matrix is reduced to a combination of a few 0s and 1s. That is, the amount of data of the original 8*8 integer matrix is considerably reduced through DCT, quantization, zigzag scanning and Huffman coding.

The ultrasound image includes a speckle noise, which is different from general images. Since the speck noise is a high frequency component, it tends to degrade the compression rate of the ultrasound image. However, the speckle noise is an important factor for diagnosis. Since the conventional JPEG compression method employs a quantization table and a Huffman coding table reflecting the characteristic of the general images, there is a problem in that the speckle noise becomes damaged during the compression.

## BRIEF DESCRIPTION OF THE DRAWINGS

Arrangements and embodiments may be described in detail with reference to the following drawings in which like reference numerals refer to like elements and wherein:

FIG. 1 shows an example of a 8*8 block in an original image;
FIG. 2 shows an example of DCT coefficients in a 8*8 block;

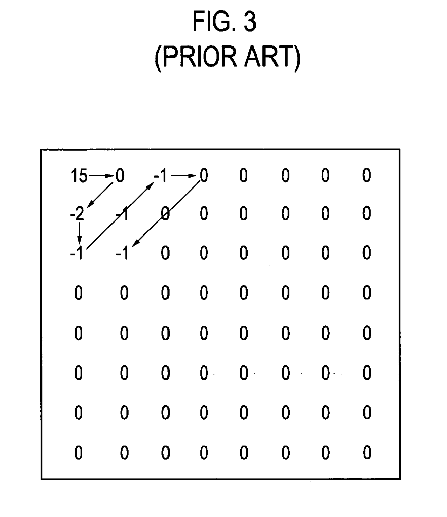

FIG. 3 shows a zigzag scanning in a quantized block;
FIG. 4 is a flow chart showing a process for coding an ultrasound image in accordance with one embodiment of the present invention;
FIG 5 shows a conventional quantization table for luminance components; and
FIG. 6 shows a conventional quantization table for chrominance components.

## DETAILED DESCRIPTION OF THE PRESENT INVENTION

The present invention provides an ultrasound image compressing method, which conducts coding by using a Huffman coding table updated by reflecting the frequencies of appearance of DC and AC coefficients of previously coded ultrasound images. Hereinafter, one embodiment of the present invention will be described with reference to the accompanying drawings.

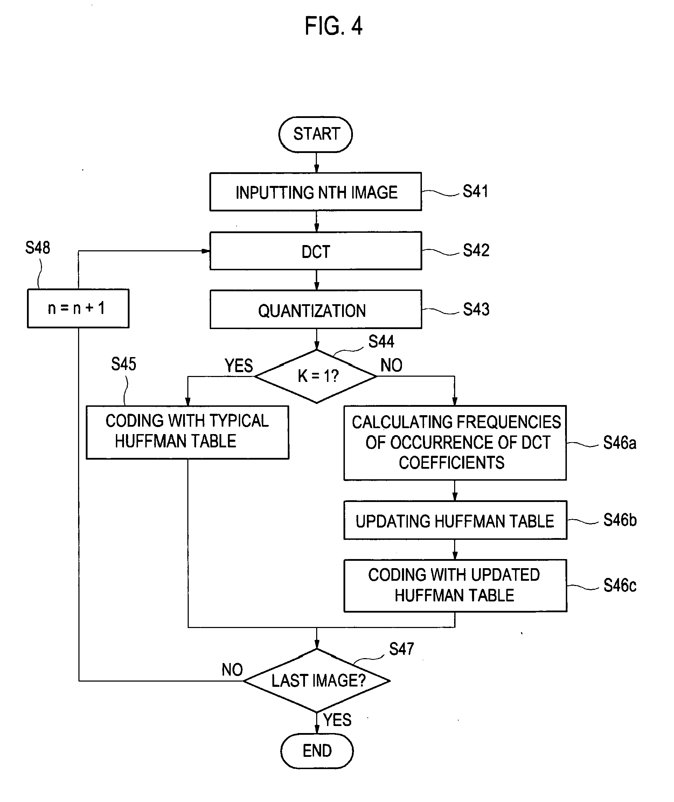

FIG. 4 is a flowchart illustrating a process of coding an ultrasound image in accordance with one embodiment of the present invention. As illustrated in Fig. 4, a plurality of ultrasound images is sequentially inputted at step S41. A current ultrasound image, among the sequentially inputted ultrasound images, is partitioned into a plurality of blocks, wherein the block is an 8*8 pixel matrix. Then, discrete cosine transform (DCT) is applied to all pixel values of the corresponding block. This is so that 64 DCT coefficients are obtained at the block at step S42. Thereafter, the DCT coefficients are quantized. The quantization is carried out by dividing equalized quantization parameters and rounding off the division result as the following equation (3),

$$S_{qvu} = round\left(\frac{S_{vu}}{Q_{vu}}\right) \qquad (3)$$

wherein round() represents an operator for rounding off the division result to the nearest integer. Svu represents a DCT coefficient and Qvu represents an equalized quantization parameter. In the quantization of the conventional JPEG compression, the AC coefficients (high frequency components) and the DC coefficient (low frequency component) within the block are quantized by using different quantization parameters for the respective luminance components and chrominance components.

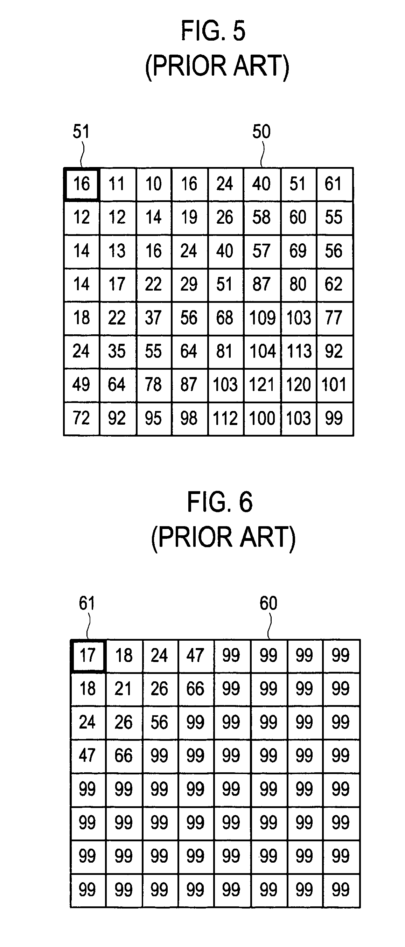

FIG. 5 shows a conventional quantization table for the luminance components. The quantization table 50 for the luminance components includes 64 quantization parameters corresponding to the 64 DCT coefficients of the block. As shown in FIG. 5, the DCT coefficients corresponding to the higher frequencies are generally quantized with higher quantization parameters. That is, the AC coefficients, which are far away from the DC coefficient 51, are quantized with larger quantization parameters than those of the AC coefficients close to the DC coefficient 51.

FIG. 6 shows a conventional quantization table for the chrominance components. The quantization table 60 for the chrominance components includes 64 quantization parameters corresponding to the 64 DCT coefficients of the block. As shown in FIG. 6, the DCT coefficients corresponding to the higher frequencies are also quantized with higher quantization parameters. That is, the AC coefficients far from the DC coefficient 61 are quantized with larger quantization parameters than those of the AC coefficients close to the DC coefficient 61. When the DCT coefficients are quantized with the conventional quantization parameters, the DCT coefficients corresponding to the higher frequencies experience more loss than those of the low frequencies. As such, a loss of speckle components corresponding to the high frequencies occurs.

Therefore, in accordance with one embodiment of the present invention, the DC coefficient and the AC coefficients contained in the same block are quantized with the equalized quantization parameter Qvu. This is so that the loss of speckle components corresponding to the high frequencies can be prevented. That is, since the high frequency components and the low frequency components in an ultrasound image, which contains many high frequency components compared to the general images, are quantized with an identical quantization parameter. Thus, a loss of information associated with the speckles and the blood flow can be efficiently suppressed.

Subsequently, it is checked whether the currently inputted ultrasound image constitutes a first image at step S44. If it is determined that the current ultrasound image is the first ultrasound image, then the ultrasound image is coded by using a typical Huffman table. On the other hand, if it is determined that the current ultrasound image is not the first ultrasound image (e.g., the current ultrasound is an $n^{th}$ ultrasound image), then the Huffman table used to code a $(n-1)^{th}$ ultrasound image is updated by reflecting the characteristics of the first to $(n-1)^{th}$ ultrasound images. To update the Huffman table, codewords of the quantized DC and AC values for the luminance components, as well as the chrominance components and the number of each codeword, should be determined. The codewords may be determined according to the frequency of occurrence of each value in the corresponding image frame. That is, when the frequency of occurrence is higher, the shorter codeword is assigned in the Huffman table. For example, the length of the codewords corresponding to the quantized DC values for the luminance components may be represented in the Huffman table as the following equation (4),

$$\text{bits\_dc\_luminance}[5] = \{0, 1, 2, 1, 4\} \tag{4}$$

wherein, the numbers 0, 1, 2, 1 and 4 represent the numbers of 0-bit, 1-bit, 2-bit, 3-bit and 4-bit codewords, respectively.

The quantized DC values for the luminance components corresponding to the equation (4) may be represented as the following equation (5),

$$\text{val\_dc\_luminance}[\,] = \{0, 5, 1, 3, 6, 4, 7, 2\} \tag{5}$$

wherein the quantized DC value '0' for the luminance component is represented by the 1-bit codeword, the quantized DC values '5' and '1' are represented by the 2-bit codeword, the quantized DC value '3' is represented by the 3-bit codeword, and the quantized DC values '6', '4', '7' and '2' are represented by the 4-bit codeword.

The Huffman table used to code the first ultrasound image may be set for DC code lengths, quantized DC values, AC code lengths and quantized AC values for the luminance components using the following equation (6),

```
bits_dc_luminance[16] =
    { 0, 1, 5, 1, 1, 1, 1, 1, 1, 0, 0, 0, 0, 0, 0, 0 }
val_dc_luminance[] =
    { 0, 1, 2, 3, 4, 5, 6, 7, 8, 9, 10, 11 };

bits_ac_luminance[17] =
    { 0, 0, 2, 1, 3, 3, 2, 4, 3, 5, 5, 4, 4, 0, 0, 1,
val_ac_luminance[] =
    { 0x01, 0x02, 0x03, 0x00, 0x04, 0x11, 0x05, 0x12,
      0x21, 0x31, 0x41, 0x06, 0x13, 0x51, 0x61, 0x07,
      0x22, 0x71, 0x14, 0x32, 0x81, 0x91, 0xa1, 0x08,
      0x23, 0x42, 0xb1, 0xc1, 0x15, 0x52, 0xd1, 0xf0,
      0x24, 0x33, 0x62, 0x72, 0x82, 0x09, 0x0a, 0x16,
      0x17, 0x18, 0x19, 0x1a, 0x25, 0x26, 0x27, 0x28,
      0x29, 0x2a, 0x34, 0x35, 0x36, 0x37, 0x38, 0x39,
      0x3a, 0x43, 0x44, 0x45, 0x46, 0x47, 0x48, 0x49,
      0x4a, 0x53, 0x54, 0x55, 0x56, 0x57, 0x58, 0x59,
      0x5a, 0x63, 0x64, 0x65, 0x66, 0x67, 0x68, 0x69,
      0x6a, 0x73, 0x74, 0x75, 0x76, 0x77, 0x78, 0x79,
      0x7a, 0x83, 0x84, 0x85, 0x86, 0x87, 0x88, 0x89,
      0x8a, 0x92, 0x93, 0x94, 0x95, 0x96, 0x97, 0x98,
      0x99, 0x9a, 0xa2, 0xa3, 0xa4, 0xa5, 0xa6, 0xa7,
      0xa8, 0xa9, 0xaa, 0xb2, 0xb3, 0xb4, 0xb5, 0xb6,
      0xb7, 0xb8, 0xb9, 0xba, 0xc2, 0xc3, 0xc4, 0xc5,
      0xc6, 0xc7, 0xc8, 0xc9, 0xca, 0xd2, 0xd3, 0xd4,
      0xd5, 0xd6, 0xd7, 0xd8, 0xd9, 0xda, 0xe1, 0xe2,
      0xe3, 0xe4, 0xe5, 0xe6, 0xe7, 0xe8, 0xe9, 0xea,
      0xf1, 0xf2, 0xf3, 0xf4, 0xf5, 0xf6, 0xf7, 0xf8,
      0xf9, 0xfa }
```

(6)

Also, the Huffman table used to code the first ultrasound image may be set for DC code lengths, DC values, AC code lengths and AC values for the chrominance components using the following equation (7),

```
bits_dc_chrominance[16] =
    { 0, 3, 1, 1, 1, 1, 1, 1, 1, 1, 1, 0, 0, 0, 0, 0 };
val_dc_chrominance[] =
    { 0, 1, 2, 3, 4, 5, 6, 7, 8, 9, 10, 11 };
bits_ac_chrominance[17] =
    { 0, 2, 1, 2, 4, 4, 3, 4, 7, 5, 4, 4, 0, 1, 2, 0x77 };
val_ac_chrominance[] =
{ 0x00, 0x01, 0x02, 0x03, 0x11, 0x04, 0x05, 0x21,
  0x31, 0x06, 0x12, 0x41, 0x51, 0x07, 0x61, 0x71,
  0x13, 0x22, 0x32, 0x81, 0x08, 0x14, 0x42, 0x91,
  0xa1, 0xb1, 0xc1, 0x09, 0x23, 0x33, 0x52, 0xf0,
  0x15, 0x62, 0x72, 0xd1, 0x0a, 0x16, 0x24, 0x34,
  0xe1, 0x25, 0xf1, 0x17, 0x18, 0x19, 0x1a, 0x26,
  0x27, 0x28, 0x29, 0x2a, 0x35, 0x36, 0x37, 0x38,
  0x39, 0x3a, 0x43, 0x44, 0x45, 0x46, 0x47, 0x48,
  0x49, 0x4a, 0x53, 0x54, 0x55, 0x56, 0x57, 0x58,
  0x59, 0x5a, 0x63, 0x64, 0x65, 0x66, 0x67, 0x68,
  0x69, 0x6a, 0x73, 0x74, 0x75, 0x76, 0x77, 0x78,
  0x79, 0x7a, 0x82, 0x83, 0x84, 0x85, 0x86, 0x87,
  0x88, 0x89, 0x8a, 0x92, 0x93, 0x94, 0x95, 0x96,
  0x97, 0x98, 0x99, 0x9a, 0xa2, 0xa3, 0xa4, 0xa5,
  0xa6, 0xa7, 0xa8, 0xa9, 0xaa, 0xb2, 0xb3, 0xb4,
  0xb5, 0xb6, 0xb7, 0xb8, 0xb9, 0xba, 0xc2, 0xc3,
  0xc4, 0xc5, 0xc6, 0xc7, 0xc8, 0xc9, 0xca, 0xd2,
  0xd3, 0xd4, 0xd5, 0xd6, 0xd7, 0xd8, 0xd9, 0xda,
  0xe2, 0xe3, 0xe4, 0xe5, 0xe6, 0xe7, 0xe8, 0xe9,
  0xea, 0xf2, 0xf3, 0xf4, 0xf5, 0xf6, 0xf7, 0xf8,
  0xf9, 0xfa }
```

(7)

If it is determined that the current image is not the first image at step S44, then the Huffman table is updated by using a frequency of occurrence of each quantized DCT coefficient at step S46a. For example, if the current image is an $n^{th}$ image, then the frequency of occurrence $F_n$ of each quantized DCT coefficient in the $n^{th}$ image may be calculated using the following equation (8),

$$F_n = \alpha f_n + \beta F_{n-1} \qquad (8)$$

wherein $f_n$ represents a frequency of occurrence of an arbitrary quantized DCT coefficient in the $n^{th}$ image, and $F_{n-1}$ represents a frequency of occurrence of the corresponding DCT coefficient calculated in the $(n-1)^{th}$ image. $\alpha$ and $\beta$ represent the predetermined weights. The weight $\alpha$ may be determined to be equal to or greater than the weight $\beta$. As shown in the equation (8), the frequency of occurrence of each DCT coefficient is accumulated to be used in the next image. If a frequency $F_n$ of occurrence of an arbitrary DCT coefficient is 0, then the frequency is replaced with 1. That is, the minimum value of the frequency $F_n$ becomes 1. The reason for replacing the frequency of 0 is to produce codewords, which are not produced up to $(n-1)^{th}$ images, at the $n^{th}$ ultrasound image. The Huffman table is updated by using the frequencies calculated according to the equation (8) at step S46b. Then, the current ultrasound image is coded by using the updated Huffman table at step S46c.

Thereafter, it is checked whether the current ultrasound image is the last ultrasound image at step S47. If the current ultrasound image is the last ultrasound image, then the process ends. On the other hand, if the current ultrasound image is not the last ultrasound image, then the $(n+1)^{th}$ ultrasound image is inputted at step S48 and then the process goes to the step S42.

As mentioned above, since the ultrasound image is quantized with the equalized quantization parameters, the loss of the speckle components corresponding to relatively high frequencies can be suppressed. Also, due to the ultrasound image coded by using the Huffman table reflecting the characteristics of the previous ultrasound images, the ultrasound image can be efficiently compressed without any degradation thereof.

A method of compressing ultrasound images with a Huffman table, comprising: a) receiving consecutive ultrasound images each having a plurality of pixels; b) determining characteristics of the pixels of the ultrasound images; c) updating the Huffman table based on the characteristics of the pixels of first to $(n-1)^{th}$ ultrasound images, wherein n is an integer greater than 1; and d) coding the pixels of an $n^{th}$ ultrasound image with the updated Huffman table.

Any reference in this specification to "one embodiment," "an embodiment," "example embodiment," etc., means that a particular feature, structure or characteristic described in connection with the embodiment is included in at least one embodiment of the invention. The appearances of such phrases in various places in the specification are not necessarily all referring to the same embodiment. Further, when a particular feature, structure or characteristic is described in connection with any embodiment, it is submitted that it is within the purview of one skilled in the art to effect such feature, structure or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, numerous variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method of compressing ultrasound images with a Huffman table, comprising:

   a) receiving consecutive ultrasound images each having a plurality of pixels;
   b) determining characteristics of the pixels of the ultrasound images;
   c) updating the Huffman table based on the characteristics of the pixels of first to $(n-1)^{th}$ ultrasound images, wherein n is an integer greater than 1; and
   d) coding the pixels of an $n^{th}$ ultrasound image with the updated Huffman table.

2. The method of Claim 1, wherein the step b) includes:

   b1) sequentially performing discrete cosine transform (DCT) for the ultrasound images to produce DCT coefficients;
   b2) quantizing the DCT coefficients; and
   b3) acquiring the characteristics of the pixels of the ultrasound images based on the DCT coefficients.

3. The method of Claim 2, wherein the characteristics are frequencies of occurrence of the DCT coefficients accumulated from the first to $(n-1)^{th}$ ultrasound images.

4. The method of Claim 3, wherein if the frequency of occurrence is 0, then the frequency of 0 is replaced with 1.

5. The method of Claim 2, wherein the DCT coefficients are quantized with an identical quantization parameter.

## FIG. 1
## (PRIOR ART)

| 139 | 144 | 149 | 153 | 155 | 155 | 155 | 155 |
| 144 | 151 | 153 | 156 | 159 | 156 | 156 | 156 |
| 150 | 155 | 160 | 163 | 158 | 156 | 156 | 156 |
| 159 | 161 | 162 | 160 | 160 | 159 | 159 | 159 |
| 159 | 160 | 161 | 162 | 162 | 155 | 155 | 155 |
| 161 | 161 | 161 | 161 | 160 | 157 | 157 | 157 |
| 162 | 162 | 161 | 163 | 162 | 157 | 157 | 157 |
| 162 | 162 | 161 | 161 | 163 | 158 | 158 | 158 |

## FIG. 2
## (PRIOR ART)

| 235.6 | -1.0 | -12.1 | -5.2 | 2.1 | -1.7 | -2.7 | 1.3 |
| -22.6 | -17.5 | -6.2 | -3.2 | -2.9 | -0.1 | 0.4 | -1.2 |
| -10.9 | -9.3 | -1.6 | 1.5 | 0.2 | -0.9 | -0.6 | -0.1 |
| -7.1 | -1.9 | 0.2 | 1.5 | 0.9 | -0.1 | 0.0 | 0.3 |
| -0.6 | -0.8 | 1.5 | 1.6 | -0.1 | -0.7 | 0.6 | 1.3 |
| 1.8 | -0.2 | 1.6 | -0.3 | -0.8 | 1.5 | 1.0 | -1.0 |
| -1.3 | -0.4 | -0.3 | -1.5 | -0.5 | 1.7 | 1.1 | -0.8 |
| -2.6 | 1.6 | -3.8 | -1.8 | 1.9 | 1.2 | -0.6 | -0.4 |

EP 1 874 057 A2

# FIG. 3
# (PRIOR ART)

9

## FIG. 4

```
                              ( START )
                                  │
                                  ▼
                   ┌──────────────────────────┐
                   │   INPUTTING NTH IMAGE     │─── S41
                   └──────────────────────────┘
                                  │
                                  ▼
S48         ┌──────────────────────────┐
 └─────────▶│           DCT            │─── S42
            └──────────────────────────┘
   ┌──────────┐         │
   │ n = n + 1│         ▼
   └──────────┘  ┌──────────────────────────┐
                 │       QUANTIZATION        │─── S43
                 └──────────────────────────┘
                                  │  S44
                                  ▼
        S45          YES      ◇       NO
                    ◄───── < K = 1? > ─────►
                              ◇
   ┌──────────────────────┐         ┌──────────────────────────┐
   │  CODING WITH TYPICAL │         │ CALCULATING FREQUENCIES  │
   │    HUFFMAN TABLE     │         │  OF OCCURRENCE OF DCT    │─── S46a
   └──────────────────────┘         │      COEFFICIENTS        │
              │                      └──────────────────────────┘
              │                                 │
              │                                 ▼
              │                      ┌──────────────────────────┐
              │                      │  UPDATING HUFFMAN TABLE   │─── S46b
              │                      └──────────────────────────┘
              │                                 │
              │                                 ▼
              │                      ┌──────────────────────────┐
              │                      │   CODING WITH UPDATED    │─── S46c
              │                      │      HUFFMAN TABLE        │
              │                      └──────────────────────────┘
              │                                 │
              └────────────┬────────────────────┘
                           ▼   S47
              NO      ◇
          ◄─────── < LAST IMAGE? >
                        ◇
                         │ YES
                         ▼
                     ( END )
```

EP 1 874 057 A2

# FIG. 5
# (PRIOR ART)

51                    50

| 16 | 11 | 10 | 16 | 24 | 40 | 51 | 61 |
|----|----|----|----|----|----|----|----|
| 12 | 12 | 14 | 19 | 26 | 58 | 60 | 55 |
| 14 | 13 | 16 | 24 | 40 | 57 | 69 | 56 |
| 14 | 17 | 22 | 29 | 51 | 87 | 80 | 62 |
| 18 | 22 | 37 | 56 | 68 | 109 | 103 | 77 |
| 24 | 35 | 55 | 64 | 81 | 104 | 113 | 92 |
| 49 | 64 | 78 | 87 | 103 | 121 | 120 | 101 |
| 72 | 92 | 95 | 98 | 112 | 100 | 103 | 99 |

# FIG. 6
# (PRIOR ART)

61                    60

| 17 | 18 | 24 | 47 | 99 | 99 | 99 | 99 |
|----|----|----|----|----|----|----|----|
| 18 | 21 | 26 | 66 | 99 | 99 | 99 | 99 |
| 24 | 26 | 56 | 99 | 99 | 99 | 99 | 99 |
| 47 | 66 | 99 | 99 | 99 | 99 | 99 | 99 |
| 99 | 99 | 99 | 99 | 99 | 99 | 99 | 99 |
| 99 | 99 | 99 | 99 | 99 | 99 | 99 | 99 |
| 99 | 99 | 99 | 99 | 99 | 99 | 99 | 99 |
| 99 | 99 | 99 | 99 | 99 | 99 | 99 | 99 |

11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020060061088